# EUROPÄISCHE PATENTSCHRIFT

(11) **EP 3 212 440 B1**
(45) Veröffentlichungstag und Bekanntmachung des Hinweises auf die Patenterteilung: **24.10.2018**
(21) Anmeldenummer: 15732280.1
(22) Anmeldetag: 01.07.2015
(51) Int. Cl.: B60C 9/02, B60C 15/00, B60C 9/04

(54) **FAHRZEUGLUFTREIFEN AUFWEISEND EINE KARKASSE**
PNEUMATIC VEHICLE TYRE COMPRISING A CARCASS
PNEUMATIQUE DE VÉHICULE COMPRENANT UNE CARCASSE

(30) Priorität: 31.10.2014 DE 102014222306
(43) Veröffentlichungstag der Anmeldung: 06.09.2017
(73) Patentinhaber: Continental Reifen Deutschland GmbH, 30165 Hannover (DE)
(72) Erfinder: DE RIVA-PEREZ, Julian, 30451 Hannover (DE); VOELSEN, Peter, 30827 Garbsen (DE)
(74) Vertreter: Finger, Karsten
(86) Internationale Anmeldenummer: PCT/EP2015/064932
(87) Internationale Veröffentlichungsnummer: WO 2016/066285

(56) Entgegenhaltungen:
- US-A- 6 142 205
- US-A1- 2001 001 971
- US-B1- 6 536 495

## Beschreibung

Die Erfindung betrifft einen Fahrzeugluftreifen mit zumindest einem profilierten Laufstreifen, einem Gürtel, zwei Seitenwänden, zwei Wulstkernen und einer Karkasse, wobei die Karkasse zwei Karkasslagen aufweist, wobei jede Karkasslage Festigkeitsträger aufweist, welche innerhalb der Karkasslage im Wesentlichen parallel zueinander angeordnet und in elastomerem Material eingebettet sind, wobei die erste Karkasslage zusammenhängend verläuft und sich dabei zumindest von einem Wulstkern zum anderen Wulsterkern erstreckt, um jeden Wulstkern von axial innen nach axial außen verläuft und sich in einem Karkasshochschlag in Richtung Gürtel erstreckt und wobei zumindest im Bereich einer Gürtelkante die zweite Karkasslage radial außerhalb der ersten Karkasslage angeordnet ist.

Ein Fahrzeugluftreifen weist im Allgemeinen eine luftundurchlässige Innenschicht, eine Festigkeitsträger enthaltende Karkasse, die vom Zenitbereich des Reifens über die Seitenwände bis in die Wulstbereiche reicht und dort meist durch Umschlingen zugfester Wulstkerne verankert ist, einen radial außen befindlichen profilierten Laufstreifen und einen zwischen dem Laufstreifen und der Karkasse angeordneten Gürtel auf, welcher üblicherweise zumindest zwei Festigkeitsträgerlagen beinhaltet und radial außen mit der Gürtelbandage abgedeckt ist.

Die Festigkeitsträger der Karkasslagen werden im Herstellungsprozess durch Kalandrieren in eine Kautschukmischung eingebettet, um als gummierte Festigkeitsträgerlage im Reifen eingesetzt werden zu können. Die Festigkeitsträger in Karkasslagen müssen eine ausreichende Festigkeit aufweisen, um die im Betrieb des Reifens auftretenden Kräfte hinreichend aufnehmen zu können und dauerhaltbar zu sein. Insbesondere leistet die Karkasse Widerstand gegen den Innendruck des Reifens und hat die Funktion eines Festigkeitsträgers. Üblicherweise handelt es sich dabei um textile Festigkeitsträger wie textile Garne oder textile Korde oder um Stahlkorde.

Eine einlagige Karkasse ist einfach und kostengünstig in der Herstellung. Eine ausreichende Robustheit des Reifens kann allerdings durch eine solche Konstruktion nicht immer sichergestellt werden. Auch können Reifen mit einer einlagigen Karkasse für den Betrachter sichtbare Einschnürungen der Seitenwände in den Bereichen der Überlappverbindungen der Karkasslage aufweisen, wodurch die Qualitätsanmutung des Reifens verringert ist.

Es sind Reifen bekannt, die zwei Karkasslagen aufweisen, wobei sich die beiden Karkasslagen nur durch ihre Abmessung und Anordnung unterscheiden. Eine solche zweilagige Konstruktion weist eine größere Festigkeit und eine größere Steifigkeit auf, wodurch die Robustheit und die Haltbarkeit des Reifens im Vergleich zu einer einlagigen Konstruktion verbessert sind. Auch der Effekt der Einschnürung der Seitenwand ist hierdurch reduziert. Eine solche zweite Lage ist allerdings mit erheblichem zusätzlichem Materialaufwand verbunden, was sich negativ auf die Materialkosten, das Gewicht und den Rollwiderstand des Reifens auswirkt.

Die US 6 142 205 A offenbart einen Fahrzeugluftreifen aufweisend eine Karkasse mit zwei Karkasslagen, wobei die Festigkeitsträger der zweiten Karkasslage einen größeren Elastizitätsmodul aufweisen als die Festigkeitsträger der ersten Karkasslage.

Aus der US 6 536 495 B1 ist ein Fahrzeugluftreifen mit einer zweilagigen Karkasse bekannt, wobei die zweite Karkasslage einen größeren Elastizitätsmodul aufweist als die erste Karkasslage. Aus der US 2001/001971 A1 ist ein Reifen gemäß der Eingangs erläuterten Art bekannt, wobei die zweite Karkasslage eine größere Fadendichte aufweist als die erste Karkasslage.

Es ist die Aufgabe der Erfindung, einen Fahrzeugluftreifen bereitzustellen, der bei ausreichender Robustheit bei einem Betrachter ebenfalls eine hohe Qualitätsanmutung erzeugt und dabei in seiner Herstellung kostengünstiger ist und einen reduzierten Rollwiderstand aufweist.

Die Aufgabe wird gelöst, indem das Produkt EF1 aus dem mittleren Elastizitätsmodul der Festigkeitsträger der ersten Karkasslage und der Fadendichte der Festigkeitsträger der ersten Karkasslage und das Produkt EF2 aus dem mittleren Elastizitätsmodul der Festigkeitsträger der zweiten Karkasslage und der Fadendichte der Festigkeitsträger der zweiten Karkasslage die Relation EF1 > EF2, bevorzugt die Relation 1,5 x EF2 ≥ EF1 ≥ 1,3 x EF2, erfüllen, wobei der Elastizitätsmodul eines Festigkeitsträgers jeweils gemessen ist bei einer Dehnung von 2% gemäß ASTM D885. Es ist dabei die Kraft bestimmt, die jeweils auf den Festigkeitsträger bei 2% Dehnung aufgebracht werden muss. Zweckmäßig ist es dabei, wenn alle Festigkeitsträger einer Karkasslage den gleichen Elastizitätsmodul aufweisen. Weist eine Karkasslage jedoch Festigkeitsträger mit unterschiedlichem Elastizitätsmodul auf, so wird der mittlere Elastizitätsmodul der Festigkeitsträger der jeweiligen Lage gemäß arithmetischem Mittel bestimmt. Die Fadendichte gibt an, wie viele Festigkeitsträger pro Längeneinheit senkrecht zur Erstreckung der Festigkeitsträger angeordnet sind. Die Produkte EF1 und EF2 entsprechen somit dem kumulierten Elastizitätsmodul der pro Längeneinheit (der Fadendichte) angeordneten Festigkeitsträger und bestimmt somit die Dehnbarkeit der zur Festigkeitsträgerlage der jeweiligen Karkasslage angeordneten Festigkeitsträger. Diese Dehnbarkeit der Festigkeitsträgerlage wiederum dient als Indikator für die Dehnbarkeit der jeweiligen Karkasslage aufweisend eine solche Festigkeitsträgerlage.

Die erste Karkasslage und die zweite Karkasslage unterscheiden sich in ihren Produkten EF1 und EF2, wobei die erste Karkasslage ein größeres Produkt aus Elastizitätsmodul und Fadendichte aufweist als die zweite Karkasslage. Die Festigkeitsträgerlage der ersten Karkasslage weist somit eine geringere Dehnbarkeit auf als die Festigkeitsträgerlage der zweiten Karkasslage auf. Die Bündelung der im Betrieb des Reifens auftretenden Kräfte sowie die strukturelle Haltbarkeit des Reifens sind vorwiegend durch die erste Karkasslage gewährleistet. Durch die Wahl des Produktes EF2 der zweiten Karkasslage ist somit die Verstärkung der Karkasse durch die zweite Karkasslage, insbesondere die Dehnbarkeit und Steifigkeit der Karkasse, flexibel einstellbar und eine Verstärkung des Reifens erfolgt nur im zur Sicherstellung von Faktoren wie Dehnbarkeit, Robustheit und Seitenwandeinschnürung erforderlichen Maße. Durch die geringeren Anforderungen an die zweite Karkasslage sind zudem Materialkosten und Reifengewicht reduziert unter Beibehaltung der Vorteile einer zweiten Karkasslage. Es ist somit ein Fahrzeugluftreifen bereitgestellt, der bei ausreichender Robustheit bei einem Betrachter ebenfalls eine hohe Qualitätsanmutung erzeugt und dabei in seiner Herstellung kostengünstiger ist und über die Gewichtsersparnis einen reduzierten Rollwiderstand aufweist.

Vorteilhaft ist es, wenn die Festigkeitsträger der ersten Karkasslage und die Festigkeitsträger der zweiten Karkasslage aus dem gleichen Material gebildet sind. Die Festigkeitsträger beider Karkasslagen weisen somit gleiche Materialeigenschaften auf.

In einer weiteren bevorzugten Ausführungsform erfüllen das Produkt FF1 aus der mittleren Feinheit der Festigkeitsträger der ersten Karkasslage und der Fadendichte der Festigkeitsträger der ersten Karkasslage und das Produkt FF2 aus der mittleren Feinheit der Festigkeitsträger der zweiten Karkasslage und der Fadendichte der Festigkeitsträger der zweiten Karkasslage die Relation FF1 > FF2, bevorzugt die Relation 1,5 x FF2 ≥ FF1 ≥ 1,3 x FF2. Die Feinheit ist ein Maß für das Gewicht des Festigkeitsträgers pro Länge des Festigkeitsträgers. Zweckmäßig ist es dabei, wenn alle Festigkeitsträger einer Karkasslage die gleiche Feinheit aufweisen. Weist eine Karkasslage jedoch Festigkeitsträger mit unterschiedlicher Feinheit auf, so wird die mittlere Feinheit der Festigkeitsträger der jeweiligen Lage gemäß arithmetischem Mittel bestimmt. Die Produkte FF1 und EF2 entsprechen somit der kumulierten Feinheit der pro Längeneinheit (der Fadendichte) angeordneten Festigkeitsträger und bestimmt somit die Dehnbarkeit der zur Festigkeitsträgerlage der jeweiligen Karkasslage angeordneten Festigkeitsträger. Durch eine solche Kombination von Karkasslagen wird auf einfache Art und Weise bei ausreichender Robustheit des Fahrzeugluftreifens eine Reduktion des Materialeinsatzes erwirkt.

Eine besonders einfache Ausführungsform ergibt sich, wenn alle Festigkeitsträger einer Karkasslage gleich ausgebildet sind. Eine besonders einfache Ausführungsform ergibt sich auch, wenn sich die beiden Karkasslagen nur in der Feinheit der Festigkeitsträger oder der Fadendichte der Festigkeitsträger oder dem Elastizitätsmodul der Festigkeitsträger unterscheiden.

Vorteilhaft ist es auch, wenn sich die zweite Karkasslage zusammenhängend zumindest von einem Wulstkern zum anderen Wulstkern erstreckt. Durch diese besonders einfache Konstruktion ist sichergestellt, dass die Verstärkung der Karkasse durch die zweite Karkasslage auf beiden Reifenhälften für die gesamte Erstreckung zwischen Wulstkern und Gürtel gewährleistet ist. Der Bereich zwischen Wulstkern und Gürtel ist für die Sicherstellung der Robustheit und die Seitenwandeinschnürung von besonderer Bedeutung.

Eine weitere vorteilhafte Karkass-Konstruktion ergibt sich, wenn die zweite Karkasslage eine geteilte Lage aus zwei Lagenteilen ist, wenn zumindest von der radial äußeren Höhe eines jeden Wulstkerns ein Lagenteil in radialer Richtung in Richtung Gürtel verläuft, bis unter den Gürtel geführt ist und dort endet und wenn die beiden Lagenteile im Gürtelbereich axial voneinander beabstandet angeordnet sind. Die Beabstandung der beiden Lagenteile führt zu einer zusätzlichen Reduktion des eingesetzten Materials der zweiten Karkasslage. Auf diese Weise bleiben die Vorteile der Zweilagenkonstruktion im entscheidenden Seitenwandbereich bei reduziertem Materialeinsatz erhalten. Der reduzierte Materialeinsatz bedingt geringere Herstellungskosten sowie eine Gewichtsersparnis und einen reduzierten Rollwiderstand.

Höhen werden vom radial inneren Ende des Wulstkerns aus gemessen. Die "radial äußere Höhe eines Wulstkerns" ist die Höhe, die das radial äußere Ende des Wulstkerns aufweist.

Zweckmäßig ist es auch, wenn die zweite Karkasslage nur auf einer Reifenhälfte, bevorzugt wenn die zweite Karkasslage nur auf derjenigen Reifenaußenhälfte, welche im am Fahrzeug montieren Zustand zum Fahrzeugäußeren zeigt, ausgebildet ist.

Bevorzugt verläuft die zweite Karkasslage zumindest in einer Reifenhälfte im Bereich des Karkasshochschlages der ersten Karkasslage axial außerhalb des Karkasshochschlages der ersten Karkasslage. Zweckmäßig ist dabei eine symmetrische Anordnung der Karkasslagen bezüglich der Reifenhälften.

Bevorzugt ist es auch, wenn die zweite Karkasslage zumindest in einer Reifenhälfte im Bereich des Karkasshochschlages der ersten Karkasslage axial innerhalb des Karkasshochschlages der ersten Karkasslage verläuft. Die zweite Karkasslage kann axial innerhalb oder axial außerhalb des Wulstkerns enden ohne den Wulstkern zu umschlingen oder den Wulstkern von axial außen oder von axial innen her umschlingen und in einem Karkasshochschlag enden. Auch hier ist eine symmetrische Anordnung der Karkasslagen bezüglich der Reifenhälften zweckmäßig.

Vorteilhaft ist es auch, wenn die Festigkeitsträger der beiden Karkasslagen bei entgegengesetzter Steigungsrichtung einen in etwa gleichen Winkel von 70° bis 90°, bevorzugt einen in etwa gleichen Winkel von 85° bis 90°, mit der Umfangsrichtung des Fahrzeugluftreifens einschließen. Hierdurch ist eine Seitenwandeinschnürung, die durch die Überlappverbindung einer Lage bedingt ist, durch die jeweils andere Lage besonders gut verringert.

Als zweckmäßig hat es sich herausgestellt, wenn die Festigkeitsträger beider Karkasslagen aus Korden aus dem gleichen Material gebildet sind, wenn die Korde der ersten Karkasslage aus zwei miteinander endverdrehten Garnen der Feinheit 1440 dtex gebildet sind, die mit einer Fadendichte von 105 epdm angeordnet sind und wenn die Korde der zweiten Karkasslage aus zwei miteinander endverdrehten Garnen der Feinheit 1100 dtex gebildet sind, die mit einer Fadendichte von 100 epdm angeordnet sind.

Ein solcher Reifen eignet sich hervorragend als Reifen für Personenkraftwägen (PKW) und Nutzfahrzeuge, bevorzugt für PKW.

Weitere Merkmale, Vorteile und Einzelheiten der Erfindung werden nun anhand der Zeichnungen, die schematische Ausführungsbeispiele darstellen, näher erläutert. Es zeigen die:
Fig. 1 einen Querschnitt durch einen PKW-Reifen;
Fig.2 einen Querschnitt durch eine Überlappverbindung einer Karkasslage eines erfindungsgemäßen PKW-Reifens;
Fig. 3 bis Fig. 4 jeweils einen Querschnitt durch ein Ausführungsbeispiel der Karkassanordnung in einem PKW-Reifen.

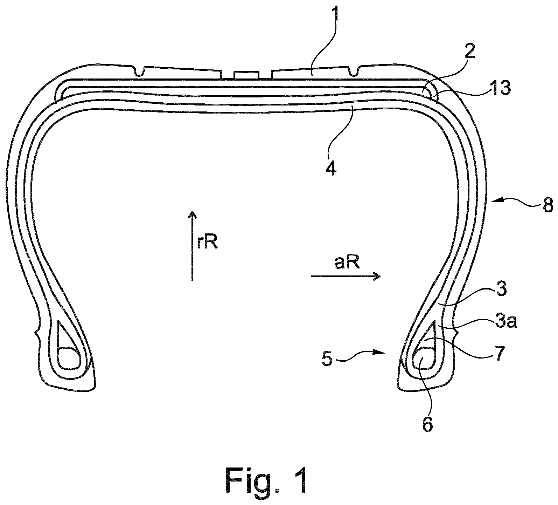

In der Fig. 1 zeigt schematisch einen Querschnitt durch einen PKW-Luftreifen. Die wesentlichen Bestandteile, aus welchen sich der dargestellte Reifen zusammensetzt, sind ein profilierter Laufstreifen 1, ein Gürtel 2, welcher radial außen von einer Gürtelbandage 13 bedeckt ist, eine weitgehend luftdicht ausgeführte Innenschicht 4, Wülste 5 mit Wulstkernen 6 und Wulstkernprofilen 7 sowie Seitenwände 8 und eine Karkasse 3, welche sich von einem Wulstkern 6 zum anderen Wulstkern 6 erstreckt und diese umschlingt. Die Karkasse 3 ist zweilagig ausgeführt, wobei die Karkasslagen in der Fig. 1 nicht einzeln dargestellt sind. Der Gürtel 2 weist zwei nicht weiter dargestellte Lagen auf, welche auf bekannte Weise aus in eine Gummimischung eingebetteten Festigkeitsträgern aus Stahlcord, welche innerhalb jeder Lage parallel zueinander verlaufen, aufweist. Die Stahlcorde der einen Lage sind dabei in kreuzender Anordnung zu den Stahlcorden der zweiten Lage orientiert. Auch die Karkasse 3 weist in elastomeres Material eingebettete, in radialer Richtung verlaufende Festigkeitsträger aus einem textilen Material oder aus Stahlcord auf, welche innerhalb jeder Karkasslage im Wesentlichen parallel zueinander angeordnet sind und wobei jede Karkasslage in Umfangsrichtung des Fahrzeugluftreifens geschlossen ist.

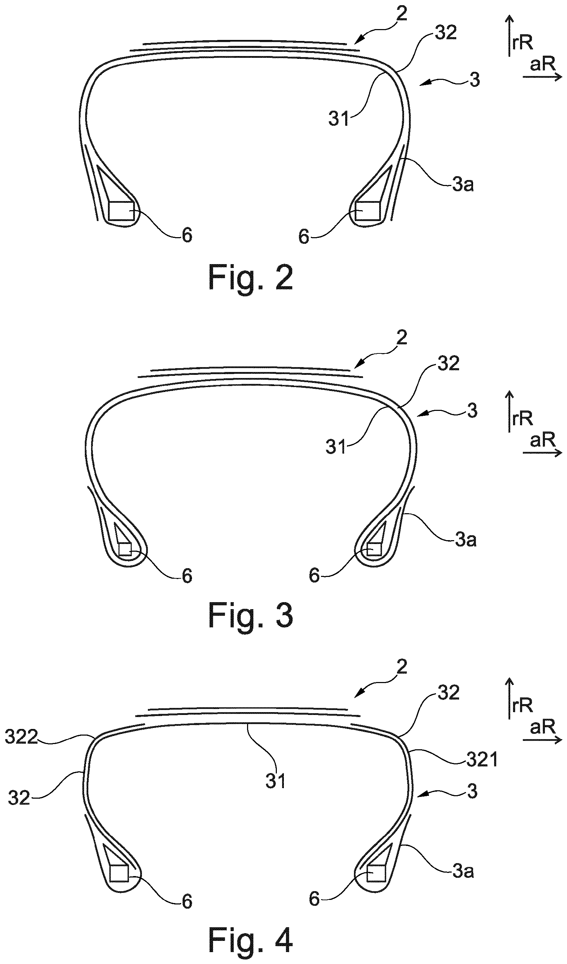

Die Fig. 2 bis Fig. 4 zeigen jeweils einen Querschnitt durch ein Ausführungsbeispiel einer Karkasslagenanordnung in einem PKW-Reifen. Die gezeigten Karkasslagenanordnungen eignen sich für den in der Fig. 1 gezeigten PKW-Reifen.

In der Fig. 2 bis Fig. 4 verläuft die erste Karkasslage 31 zusammenhängend und erstreckt sich dabei zumindest von einem Wulstkern 6 zum anderen Wulsterkern 6. Weiter verläuft die erste Karkasslage 31 um jeden Wulstkern 6 von axial innen nach axial außen und erstreckt sich in einem Karkasslagenhochschlag 3a in Richtung Gürtel 2. In den Bereichen beider Gürtelkanten ist die zweite Karkasslage 32 radial außerhalb der ersten Karkasslage 31 angeordnet. Die Anordnung beider Karkasslagen 31, 32 ist symmetrisch bezüglich der Reifenhälften. Alle Festigkeitsträger der ersten Karkasslage 31 sind gleich ausgebildet. Auch alle Festigkeitsträger der zweiten Karkasslage 32 sind gleich ausgebildet. Die Festigkeitsträger der beiden Karkasslagen 31, 32 schließen bei entgegengesetzter Steigungsrichtung einen in etwa gleichen Winkel von 85° bis 90° mit der Umfangsrichtung des Fahrzeugluftreifens ein.

In der Fig. 2 erstreckt sich auch die zweite Karkasslage 32 zusammenhängend zumindest von einem Wulstkern 6 zum anderen Wulstkern 6. Die zweite Karkasslage 32 verläuft im Bereich des Karkasshochschlages 3a der ersten Karkasslage 31 axial außerhalb des Karkasshochschlages 3a der ersten Karkasslage 31 und endet dort ohne den Wulstkern 6 zu umschlingen.

Das Produkt EF1 aus dem mittleren Elastizitätsmodul der Festigkeitsträger der ersten Karkasslage 31 und der Fadendichte der Festigkeitsträger der ersten Karkasslage 31 und das Produkt EF2 aus dem mittleren Elastizitätsmodul der Festigkeitsträger der zweiten Karkasslage 32 und Fadendichte der Festigkeitsträger der zweiten Karkasslage 32 erfüllen die Relation 1,5 x EF2 ≥ EF1 ≥ 1,3 x EF2, wobei der Elastizitätsmodul eines Festigkeitsträgers jeweils gemessen ist bei einer Dehnung von 2% gemäß ASTM D885. Weiter erfüllen das Produkt FF1 aus der mittleren Feinheit der Festigkeitsträger der ersten Karkasslage 31 und der Fadendichte der Festigkeitsträger der ersten Karkasslage 31 und das Produkt FF2 aus der mittleren Feinheit der Festigkeitsträger der zweiten Karkasslage 32 und der Fadendichte der Festigkeitsträger der zweiten Karkasslage 32 die Relation 1,5 x FF2 ≥ FF1 ≥ 1,3 x FF2.

Auch in der Fig. 3 erstreckt sich die zweite Karkasslage 32 zusammenhängend zumindest von einem Wulstkern 6 zum anderen Wulstkern 6. Die zweite Karkasslage 32 verläuft im Bereich des Karkasshochschlages 3a der ersten Karkasslage 31 axial innerhalb des Karkasshochschlages 3a der ersten Karkasslage und umschlingt den Wulstkern 6 von axial innen nach axial außen.

Die Festigkeitsträger beider Karkasslagen 31, 32 sind dabei aus Polyester. Das Produkt EF1 und das Produkt EF2 erfüllen in etwa die Relation EF1 = 1,4 x EF2. Weiter erfüllen das Produkt FF1 und das Produkt FF2 die Relation 1,5 x FF2 ≥ FF1 ≥ 1,3 x FF2. Die Festigkeitsträger der ersten Karkasslage 31 schließen bei gegengleichem Steigungswinkel einen Winkel von in etwa 89° mit der Umfangsrichtung des Fahrzeugluftreifens ein.

In der Fig. 4 ist die zweite Karkasslage 32 eine geteilte Lage aus zwei Lagenteilen 321, 322. Von der radial äußeren Höhe eines jeden Wulstkerns 6 verläuft ein Lagenteil 321, 322 in radialer Richtung in Richtung Gürtel 2. Die Lagenteile 321, 322 sind bis unter den Gürtel 2 geführt und enden dort. Die beiden Lagenteile 321, 322 sind dabei im Bereich des Gürtels 2 voneinander beabstandet angeordnet. Im Bereich des Karkasshochschlages 3a der ersten Karkasslage 31 verläuft die zweite Karkasslage 32 axial innerhalb des Karkasshochschlages 3a der ersten Karkasslage 31 und axial innerhalb des Wulstkerns 6 und endet dort ohne den Wulstkern 6 zu umschlingen.

Die Festigkeitsträger der ersten Karkasslage 31 und die Festigkeitsträger der zweiten Karkasslage 32 sind dabei aus Polyester. Die Festigkeitsträger der ersten Karkasslage 31 sind Korde aus zwei miteinander endverdrehten Garnen der Feinheit 1440 dtex, die mit einer Fadendichte von 105 epdm angeordnet sind. Die Festigkeitsträger der zweiten Karkasslage 32 sind Korde aus zwei miteinander endverdrehten Garnen der Feinheit 1100 dtex, die mit einer Fadendichte von 100 epdm angeordnet sind. Die Festigkeitsträger der beiden Karkasslagen 31, 32 schließen bei entgegengesetzter Steigungsrichtung einen in etwa gleichen Winkel von in etwa 86° mit der Umfangsrichtung des Reifens ein.

### Bezugszeichenliste (Teil der Beschreibung)

- 1: Laufstreifen
- 2: Gürtel
- 3: Karkasse
- 3a: Karkasshochschlag
- 4: Innenschicht
- 5: Wulst
- 6: Wulstkern
- 7: Wulstkernprofil
- 8: Seitenwand
- 13: Gürtelbandage
- 31: erste Karkasslage
- 32: zweite Karkasslage
- 321, 322: Lagenteil der zweiten Karkasslage

- rR: radiale Richtung
- aR: axiale Richtung

## Patentansprüche

1. Fahrzeugluftreifen mit zumindest einem profilierten Laufstreifen (1), einem Gürtel (2), zwei Seitenwänden (8), zwei Wulstkernen (6) und einer Karkasse (3), wobei die Karkasse (3) zwei Karkasslagen (31, 32) aufweist, wobei jede Karkasslage (31, 32) Festigkeitsträger aufweist, welche innerhalb der Karkasslage (31, 32) im Wesentlichen parallel zueinander angeordnet und in elastomerem Material (14) eingebettet sind, wobei die erste Karkasslage (31) zusammenhängend verläuft und sich dabei zumindest von einem Wulstkern (6) zum anderen Wulsterkern (6) erstreckt, um jeden Wulstkern (6) von axial innen nach axial außen verläuft und sich in einem Karkasshochschlag (3a) in Richtung Gürtel (2) erstreckt und wobei zumindest im Bereich einer Gürtelkante die zweite Karkasslage (32) radial außerhalb der ersten Karkasslage (31) angeordnet ist
**dadurch gekennzeichnet, dass**
das Produkt EF1 aus dem mittleren Elastizitätsmodul der Festigkeitsträger der ersten Karkasslage (31) und der Fadendichte der Festigkeitsträger der ersten Karkasslage (31) und das Produkt EF2 aus dem mittleren Elastizitätsmodul der Festigkeitsträger der zweiten Karkasslage (32) und der Fadendichte der Festigkeitsträger der zweiten Karkasslage (32) die Relation EF1 > EF2, bevorzugt die Relation 1,5 x EF2 ≥ EF1 ≥ 1,3 x EF2, erfüllen, wobei der Elastizitätsmodul eines Festigkeitsträgers jeweils gemessen ist bei einer Dehnung von 2% gemäß ASTM D885.

2. Fahrzeugluftreifen nach Anspruch 1,
**dadurch gekennzeichnet, dass** die Festigkeitsträger der ersten Karkasslage (31) und die Festigkeitsträger der zweiten Karkasslage (32) aus dem gleichen Material gebildet sind.

3. Fahrzeugluftreifen nach Anspruch 1 oder 2,
**dadurch gekennzeichnet, dass** das Produkt FF1 aus der mittleren Feinheit der Festigkeitsträger der ersten Karkasslage (31) und der Fadendichte der Festigkeitsträger der ersten Karkasslage (31) und das Produkt FF2 aus der mittleren Feinheit der Festigkeitsträger der zweiten Karkasslage (32) und der Fadendichte der Festigkeitsträger der zweiten Karkasslage (32) die Relation FF1 > FF2, bevorzugt die Relation 1,5 x FF2 ≥ FF1 ≥ 1,3 x FF2, erfüllen.

4. Fahrzeugluftreifen nach einem oder mehreren der vorangehenden Ansprüche,
**dadurch gekennzeichnet, dass** sich die zweite Karkasslage (32) zusammenhängend zumindest von einem Wulstkern (6) zum anderen Wulstkern (6) erstreckt.

5. Fahrzeugluftreifen nach einem oder mehreren der Ansprüche 1 bis 4,
**dadurch gekennzeichnet, dass** die zweite Karkasslage (32) eine geteilte Lage aus zwei Lagenteilen (321, 322) ist, dass zumindest von der radial äußeren Höhe eines jeden Wulstkerns (6) ein Lagenteil (321, 322) in radialer Richtung (rR) in Richtung Gürtel (2) verläuft, bis unter den Gürtel (2) geführt ist und dort endet und dass die beiden Lagenteile (321, 322) im Gürtelbereich axial voneinander beabstandet angeordnet sind.

6. Fahrzeugluftreifen nach einem oder mehreren der vorangehenden Ansprüche,
**dadurch gekennzeichnet, dass** die zweite Karkasslage (32) zumindest in einer Reifenhälfte im Bereich des Karkasshochschlages (3a) der ersten Karkasslage (31) axial außerhalb des Karkasshochschlages (3a) der ersten Karkasslage (31) verläuft.

7. Fahrzeugluftreifen nach einem oder mehreren der vorangehenden Ansprüche,
**dadurch gekennzeichnet, dass** die zweite Karkasslage (32) zumindest in einer Reifenhälfte im Bereich des Karkasshochschlages (3a) der ersten Karkasslage (31) axial innerhalb des Karkasshochschlages (3a) der ersten Karkasslage (31) verläuft.

8. Fahrzeugluftreifen nach einem oder mehreren der vorangehenden Ansprüche,
**dadurch gekennzeichnet, dass** die Festigkeitsträger der beiden Karkasslagen (31, 32) bei entgegengesetzter Steigungsrichtung einen in etwa gleichen Winkel von 70° bis 90°, bevorzugt einen in etwa gleichen Winkel von 85° bis 90, mit der Umfangsrichtung des Fahrzeugluftreifens einschließen.

9. Fahrzeugluftreifen nach einem oder mehreren der vorangehenden Ansprüche,
**dadurch gekennzeichnet, dass** es sich um einen Reifen für einen Personenkraftwagen oder ein Nutzfahrzeug, bevorzugt für einen Personenkraftwagen, handelt.

## Claims

1. Pneumatic vehicle tyre having at least one profiled tread (1), a belt (2), two side walls (8), two bead cores (6) and a carcass (3), wherein the carcass (3) has two carcass plies (31, 32), wherein each carcass ply (31, 32) has reinforcement members which are arranged substantially parallel to one another within the carcass ply (31, 32) and which are embedded in elastomer material (14), wherein the first carcass ply (31) runs in coherent fashion and, in so doing, extends at least from one bead core (6) to the other bead core (6), runs around each bead core (6) from axially inside to axially outside, and extends in a carcass upturned portion (3a) in the direction of the belt (2), and wherein, at least in the region of a belt edge, the second carcass ply (32) is arranged radially outside the first carcass ply (31),
**characterized in that**
the product EF1 of the mean modulus of elasticity of the reinforcement members of the first carcass ply (31) and the strand density of the reinforcement members of the first carcass ply (31) and the product EF2 of the mean modulus of elasticity of the strength members of the second carcass ply (32) and the strand density of the reinforcement members of the second carcass ply (32) satisfy the relationship EF1 > EF2, preferably the relationship 1.5 x EF2 ≥ EF1 ≥ 1.3 x EF2, wherein the modulus of elasticity of a reinforcement member is in each case measured at an elongation of 2% in accordance with ASTM D885.

2. Pneumatic vehicle tyre according to Claim 1,
**characterized in that** the reinforcement members of the first carcass ply (31) and the reinforcement members of the second carcass ply (32) are formed from the same material.

3. Pneumatic vehicle tyre according to Claim 1 or 2,
**characterized in that** the product FF1 of the mean fineness of the reinforcement members of the first carcass ply (31) and the strand density of the reinforcement members of the first carcass ply (31) and the product FF2 of the mean fineness of the reinforcement members of the second carcass ply (32) and the strand density of the reinforcement members of the second carcass ply (32) satisfy the relationship FF1 > FF2, preferably the relationship 1.5 x FF2 ≥ FF1 ≥ 1.3 x FF2.

4. Pneumatic vehicle tyre according to one or more of the preceding claims,
**characterized in that** the second carcass ply (32) extends in coherent fashion at least from one bead core (6) to the other bead core (6).

5. Pneumatic vehicle tyre according to one or more of Claims 1 to 4,
**characterized in that** the second carcass ply (32) is a split ply composed of two ply parts (321, 322), **in that**, at least from the radially outer height of each bead core (6), a ply part (321, 322) runs in a radial direction (rR) in the direction of the belt (2), is led as far as under the belt (2) and ends there, and **in that** the two ply parts (321, 322) are arranged axially spaced apart from one another in the belt region.

6. Pneumatic vehicle tyre according to one or more of the preceding claims,
**characterized in that** the second carcass ply (32) at least in one tyre half runs in the region of the carcass upturned portion (3a) of the first carcass ply (31) and axially outside the carcass upturned portion (3a) of the first carcass ply (31).

7. Pneumatic vehicle tyre according to one or more of the preceding claims,
**characterized in that** the second carcass ply (32) at least in one tyre half runs in the region of the carcass upturned portion (3a) of the first carcass ply (31) and axially within the carcass upturned portion (3a) of the first carcass ply (31).

8. Pneumatic vehicle tyre according to one or more of the preceding claims,
**characterized in that** the reinforcement members of the two carcass plies (31, 32), with opposite gradient direction, enclose an approximately equal angle of 70° to 90°, preferably an approximately equal angle of 85° to 90°, with the circumferential direction of Pneumatic vehicle tyre.

9. Pneumatic vehicle tyre according to one or more of the preceding claims,
**characterized in that** said pneumatic vehicle tyre is a tyre for a passenger motor vehicle or for a utility vehicle, preferably for a passenger motor vehicle.

## Revendications

1. Pneumatique de véhicule avec au moins une bande de roulement profilée (1), une ceinture (2), deux flancs (8), deux tringles de talon (6) et une carcasse (3), dans lequel la carcasse (3) présente deux couches de carcasse (31, 32), dans lequel chaque couche de carcasse (31, 32) présente des éléments de résistance, qui sont disposés à l'intérieur de la couche de carcasse (31, 32) essentiellement parallèlement l'un à l'autre et qui sont noyés dans le matériau élastomère (14), dans lequel la première couche de carcasse (31) est continue et s'étend en l'occurrence au moins d'une tringle de talon (6) à l'autre tringle de talon (6), se prolonge autour de chaque tringle de talon (6) du côté axialement intérieur vers le côté axialement extérieur et s'étend dans un retour montant de carcasse (3a) en direction de la ceinture (2) et dans lequel la deuxième couche de carcasse (32) est disposée radialement à l'extérieur de la première couche de carcasse (31) au moins dans la région d'un bord de ceinture,
**caractérisé en ce que** le produit EF1 du module d'élasticité moyen des éléments de résistance de la première couche de carcasse (31) et de la densité de fils des éléments de résistance de la première couche de carcasse (31) et le produit EF2 du module d'élasticité moyen des éléments de résistance de la deuxième couche de carcasse (32) et de la densité de fils des éléments de résistance de la deuxième couche de carcasse (32) satisfont la relation EF1 > EF2, de préférence la relation 1,5 x EF2 ≥ EF1 ≥ 1,3 x EF2, dans lequel le module d'élasticité d'un élément de résistance est chaque fois mesuré avec un allongement de 2 % selon la norme ASTM D885.

2. Pneumatique de véhicule selon la revendication 1, **caractérisé en ce que** les éléments de résistance de la première couche de carcasse (31) et les éléments de résistance de la deuxième couche de carcasse (32) sont formés du même matériau.

3. Pneumatique de véhicule selon la revendication 1 ou 2, **caractérisé en ce que** le produit FF1 de la finesse moyenne des éléments de résistance de la première couche de carcasse (31) et de la densité de fils des éléments de résistance de la première couche de carcasse (31) et le produit FF2 de la finesse moyenne des éléments de résistance de la deuxième couche de carcasse (32) et de la densité de fils des éléments de résistance de la deuxième couche de carcasse (32) satisfont la relation FF1 > FF2, de préférence la relation 1,5 x FF2 ≥ FF1 ≥ 1,3 x FF2.

4. Pneumatique de véhicule selon une ou plusieurs des revendications précédentes, **caractérisé en ce que** la deuxième couche de carcasse (32) s'étend de manière continue au moins d'une tringle de talon (6) à l'autre tringle de talon (6).

5. Pneumatique de véhicule selon une ou plusieurs des revendications 1 à 4, **caractérisé en ce que** la deuxième couche de carcasse (32) est une couche divisée en deux parties de couche (321, 322), **en ce qu'**une partie de couche (321, 322) s'étend en direction radiale (rR) en direction de la ceinture (2) au moins depuis la hauteur radialement extérieure de chaque tringle de talon (6), est menée jusqu'en dessous de la ceinture (2) et s'y termine et **en ce que** les deux parties de couche (321, 322) sont disposées axialement à distance l'une de l'autre dans la région de la ceinture.

6. Pneumatique de véhicule selon une ou plusieurs des revendications précédentes, **caractérisé en ce que** la deuxième couche de carcasse (32) s'étend au moins dans une moitié de pneu dans la région du retour montant de carcasse (3a) de la première couche de carcasse (31) axialement à l'extérieur du retour montant de carcasse (3a) de la première couche de carcasse (31).

7. Pneumatique de véhicule selon une ou plusieurs des revendications précédentes, **caractérisé en ce que** la deuxième couche de carcasse (32) s'étend au moins dans une moitié de pneu dans la région du retour montant de carcasse (3a) de la première couche de carcasse (31) axialement à l'intérieur du retour montant de carcasse (3a) de la première couche de carcasse (31).

8. Pneumatique de véhicule selon une ou plusieurs des revendications précédentes, **caractérisé en ce que** les éléments de résistance des deux couches de carcasse (31, 32) forment, avec une direction de pas opposée, un angle sensiblement identique de 70° à 90°, de préférence un angle sensiblement identique de 85° à 90°, avec la direction périphérique du pneumatique de véhicule.

9. Pneumatique de véhicule selon une ou plusieurs des revendications précédentes, **caractérisé en ce que** le pneumatique de véhicule est un pneu pour un voiture particulière ou un véhicule utilitaire, de préférence pour une voiture particulière.
